# DEMANDE DE BREVET EUROPEEN

(11) **EP 1 001 504 A1**
(43) Date de publication de la demande: **17.05.2000**
(21) Numéro de dépôt: 99402818.1
(22) Date de dépôt: 12.11.1999
(51) Int. Cl.: H02G 5/06

(54) **Barre de conduction électrique de type blindé pour poste électrique haute tension**

(30) Priorité: 16.11.1998 FR 9814352
(71) Demandeur: Alstom Holdings, 75116 Paris (FR)
(72) Inventeur: Thuries, Edmond, 69330 Pusignan (FR)
(74) Mandataire: Gosse, Michel

(57) **Abrégé**

La barre de conduction électrique de type blindé pour poste électrique haute tension est constituée d'un conducteur (1) disposé dans une enveloppe métallique (2) remplie d'un gaz diélectrique. Le conducteur (1) comprend au moins un tronçon usiné en forme de solénoïde préférablement associé à au moins un condensateur et à un revêtement semiconducteur pour restreindre les fronts raides très hautes fréquences qui se propagent sur la barre lors des manoeuvres de fermeture ou d'ouverture de sectionneurs dans le poste électrique.

## Description

L'invention concerne les postes électriques haute tension du type blindé comprenant un jeu de barres de conduction électrique constituées chacune d'un conducteur disposé dans une enveloppe métallique remplie d'un gaz diélectrique comme le SF6. Ce jeu de barre sert à relier, dans le cas d'une centrale de production d'électricité par exemple, les différentes cellules de départ vers les lignes ou les câbles de transport depuis les transformateurs élévateurs de tension connectés aux générateurs, ces cellules comprenant en général un disjoncteur associé à un ou plusieurs sectionneurs.

Un phénomène bien connu dans ce type de poste est celui du claquage qui se produit lors de l'ouverture de la fermeture de ces appareils de commutation. Ce phénomène est dû aux amorçages successifs de l'arc électrique qui s'étire entre les contacts d'un appareil de commutation du type sectionneur, lors de la fermeture ou de l'ouverture de celui-ci. Ces amorçages provoquent l'apparition de fronts raides ou pics de tension qui se propagent sur le jeu de barres à très hautes fréquences, de l'ordre de 1 à plusieurs dizaines de MHz, avec une amplitude atteignant 1 à 2 fois l'unité de tension.

Ces fronts raides à très hautes fréquences sont dommageables pour les isolations des transformateurs reliés au jeu de barres.

Le but de l'invention est de proposer un solution pour réduire les effets néfastes de ces fronts raides.

L'idée à la base de l'invention est de créer des obstacles sur le chemin de propagation de ces fronts raides aptes à les bloquer, ou à les amortir, ou encore à les dériver, de façon à protéger les isolations des transformateurs.

Plus particulièrement, l'invention a pour objet une barre de conduction électrique de type blindé pour poste électrique haute tension, constituée d'un conducteur disposé dans une enveloppe métallique remplie d'un gaz diélectrique, caractérisée en ce que le conducteur comprend au moins un tronçon usiné en forme de solénoïde.

Ce tronçon en forme de solénoïde se comporte comme une self inductance présentant une impédance propre à bloquer les fronts raides à très haute fréquence.

Selon un mode de réalisation particulier de la barre de conduction selon l'invention, le tronçon usiné en forme de solénoïde est noyé dans un matériau semi-conducteur. Cet agencement permet en plus de dissiper l'énergie transportée par ces hautes fréquences.

Selon un autre aspect de l'invention, le conducteur comporte un tronçon recouvert d'un matériau semi-conducteur et/ou l'enveloppe est recouverte d'un matériau semi-conducteur pour obtenir un amortissement des hautes fréquences des fronts raides en bénéficiant du phénomène bien connu de l'effet de peau.

Selon un mode particulier de réalisation de l'invention, l'enveloppe à une paroi ondulée qui se comporte comme une self inductance pour les front raides sur leur chemin de retour.

Selon encore un autre aspect de l'invention, le conducteur est entouré d'une ou plusieurs bague coaxiale au conducteur et à l'enveloppe, cette bague étant constituée d'un empilement de lames métalliques et de lames en matière isolante s'étendant radialement entre le conducteur et l'enveloppe pour former un condensateur entre le conducteur et l'enveloppe apte à dériver les fronts raides très hautes fréquences du conducteur vers l'enveloppe qui est mise au potentiel de la terre.

Toutes ces mesures servent à freiner la propagation des fronts raides sur la barre pour protéger l'isolation des transformateurs reliés à la barre. Il est entendu, que ces mesures s'appliquent sur chaque barre d'un jeu de barres de type blindé.

L'invention est décrite ci-après en détail en relation avec les figures.

La figue 1 montre de façon très schématique et en perspective un tronçon de conducteur usiné en forme de solénoïde.

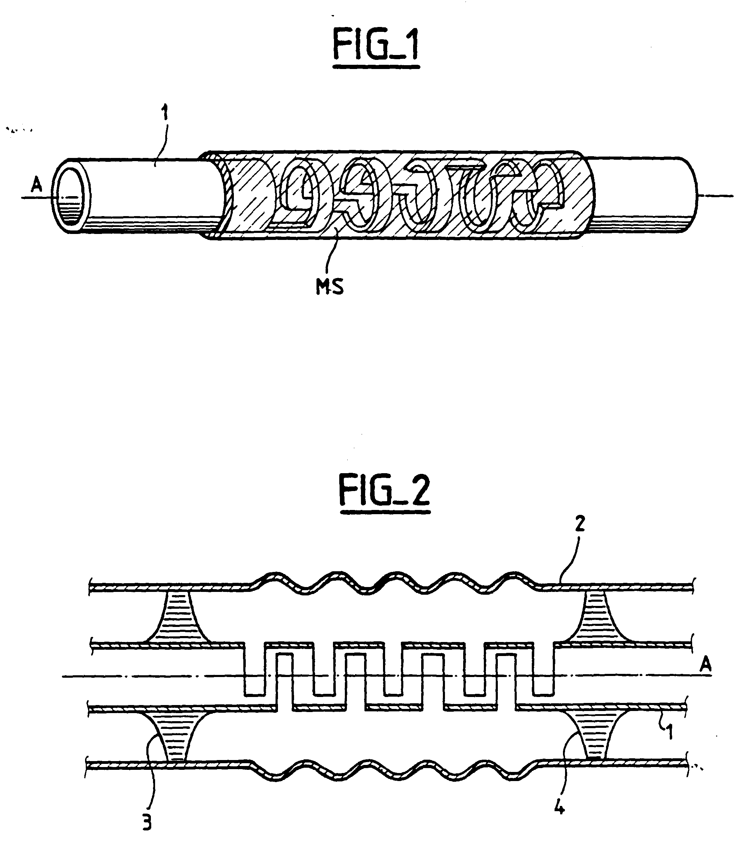

La figure 2 montre de façon très schématique en coupe longitudinale le tronçon de conducteur de la figure 1 à l'intérieur d'une enveloppe métallique.

Les figures montrent seulement une partie d'une barre d'un jeu de barres de conduction du type blindé pour un poste électrique haute tension. Dans un jeu de barres de type blindé, chaque barre est constitué d'un conducteur électrique disposé à l'intérieur d'une enveloppe métallique remplie d'un gaz diélectrique.

Figure 1, le conducteur 1 d'une barre de type blindé se présente sous la forme d'un tube métallique s'étendant longitudinalement suivant l'axe A. Il comporte un tronçon usiné en forme de solénoïde pour constituer une self inductance, les spires de la self inductance s'enroulant autour de l'axe A. L'usinage peut être réalisé simplement par fraisage. Sur la figure 1, le tronçon en forme de solénoïde est noyé dans un matériau semi-conducteur MS, par exemple un élastomère chargé en carbone.

Figure 2, l'enveloppe métallique 2 dans laquelle est disposée coaxialement le conducteur 1 présente, sur un tronçon de longueur, une paroi ondulée se comportant comme une self inductance pour les fronts raides très hautes fréquences revenant par l'enveloppe. L'enveloppe 2 avec ou sans ondulations et/ou le conducteur 1 peuvent être recouverts d'un matériau semi-conducteur pour amortir les hautes fréquences de ces fronts raides.

Figure 2, de part et d'autre du tronçon de conducteur usiné en forme de solénoïde, une bague respectivement 3,4, coaxiale au conducteur et à l'enveloppe, entoure le conducteur et le sépare de l'enveloppe. Chaque bague 2,3 sert de support au conducteur pour le tenir coaxial à l'intérieur de l'enveloppe. Chaque bague 2,3 est constituée d'un empilement de lames métalliques et de lames en matière isolante qui s'étend radialement entre le conducteur et l'enveloppe. Chaque bague 2,3 forme ainsi un condensateur entre le conducteur et l'enveloppe apte à dériver les fronts raides très hautes fréquences du conducteur vers l'enveloppe qui est mise au potentiel de la terre.

Comme visible sur la figure 2, l'épaisseur de chaque bague 2,3 formant un condensateur va en diminuant du conducteur 1 vers l'enveloppe 2 de sorte à obtenir une capacité électrique qui est linéairement répartie entre le conducteur et l'enveloppe.

La paroi interne de l'enveloppe 2 entre les deux bagues 2,3 peut avantageusement être recouverte d'un matériau semi-conducteur.

Il est entendu que pour empêcher la propagation de ces fronts raides très hautes fréquences sur une barre de conduction, on peut avantageusement combiner l'ensemble des mesures indiquées ci-dessus et prévoir en particulier un conducteur recouvert d'un matériau semi-conducteur, avec un tronçon usiné en forme de solénoïde et noyé dans le matériau semi-conducteur, une enveloppe avec une paroi ondulée recouverte du matériau semi-conducteur et séparée du conducteur par des condensateurs comme indiqués ci-dessus, la paroi interne de l'enveloppe étant également recouverte du matériau semi-conducteur.

## Revendications

1. Barre de conduction électrique de type blindé pour poste électrique haute tension, constituée d'un conducteur (1) disposé dans une enveloppe métallique (2) remplie d'un gaz diélectrique, caractérisée en ce que le conducteur (1) comprend au moins un tronçon usiné en forme de solénoïde.

2. Barre de conduction selon la revendication 1, dans laquelle le tronçon usiné en forme de solénoïde est noyé dans un matériau semi-conducteur.

3. Barre de conduction électrique de type blindé pour poste électrique haute tension, constituée d'un conducteur (1) disposé dans une enveloppe métallique (2) remplie d'un gaz diélectrique, caractérisée en ce que le conducteur comporte un tronçon recouvert d'un matériau semi-conducteur.

4. Barre de conduction électrique de type blindé pour poste électrique haute tension, constituée d'un conducteur (1) disposé dans une enveloppe métallique (2) remplie d'un gaz diélectrique, caractérisée en ce que l'enveloppe est recouverte d'un matériau semi-conducteur.

5. Barre de conduction électrique de type blindé pour poste électrique haute tension, constituée d'un conducteur (1) disposé dans une enveloppe métallique (2) remplie d'un gaz diélectrique, caractérisée en ce que le conducteur est entouré d'une bague (2,3) coaxiale au conducteur et à l'enveloppe, cette bague étant constituée d'un empilement de lames métalliques et de lames en matière isolante qui s'étend radialement entre le conducteur et l'enveloppe pour former un condensateur entre le conducteur et l'enveloppe.

6. Barre de conduction électrique de type blindé pour poste électrique haute tension, constituée d'un conducteur (1) disposé dans une enveloppe métallique (2) remplie d'un gaz diélectrique, caractérisé en ce que l'enveloppe a une paroi ondulée.

7. Barre de conduction électrique selon la revendication 6, dans laquelle l'enveloppe est recouverte d'un matériau semi-conducteur.

8. Barre de conduction électrique selon la revendication 5, dans laquelle le conducteur comprend au moins un tronçon usiné en forme de solénoïde et dans laquelle l'enveloppe a une paroi ondulée.

9. Barre de conduction électrique selon la revendication 8, dans laquelle le tronçon usiné en forme de solénoïde est noyé dans un matériau semi-conducteur et/ou l'enveloppe est recouverte d'un matériau semi-conducteur.
